# FASCICULE DE BREVET EUROPEEN

(11) **EP 1 369 349 B1**
(45) Date de publication et mention de la délivrance du brevet: **16.11.2005**
(21) Numéro de dépôt: 03291074.7
(22) Date de dépôt: 05.05.2003
(51) Int. Cl.: B64D 7/00, B64D 7/08, F41F 3/06

(54) **Arme montée sur un aéronef furtif et pourvue d'un missile, ainsi qu'un système d'arme comprenant un aéronef furtif et une telle arme**
Waffe, die eine Rakete enthält, und die an einem Tarnkappen-Flugzeug montiert ist, und Waffensystem, das ein Tarnkappen-Flugzeug und eine solche Waffe enthält
Weapon provided with a missile and which is mounted on a stealth aircraft, and a weapon system comprising a stealth aircraft and such a weapon

(30) Priorité: 07.06.2002 FR 0207016
(43) Date de publication de la demande: 10.12.2003
(73) Titulaire: MBDA France, 75016 Paris (FR)
(72) Inventeur: Thery, Jean, 78390 Bois d'Arcy (FR); Naccache, Frédéric, 91360 Epinay sur Orge (FR)
(74) Mandataire: Hauer, Bernard

(56) Documents cités:
- EP-A- 0 340 399
- FR-A- 2 796 454
- US-A- 5 279 199
- US-A- 5 717 397

## Description

La présente invention concerne une arme montée sur un aéronef furtif et pourvue d'au moins un missile, un système d'arme comprenant un aéronef furtif muni d'une telle arme ,ainsi qu'un procédé pour tirer un missile faisant partie d'une arme montée sur un aéroref furtif.

Comme un système d'arme de ce type est généralement destiné à remplir une mission dans un environnement hostile, la réussite d'une telle mission dépend souvent, en grande partie, de la faculté du système d'arme à pouvoir échapper complètement ou au moins le plus longtemps possible à tout type de détection, et en particulier à une détection par radar.

Aussi, pour augmenter l'efficacité d'un tel système d'arme, il convient de réduire sa signature radar de manière à rendre plus difficile sa détection. On sait que la signature radar d'un aéronef, notamment d'un avion de combat, comportant un ou plusieurs missiles est modifiée par ce(s) dernier(s), lors de l'emport de ce(s) missile(s).

Généralement, un tel système d'arme comporte un moyen d'emport externe des missiles sur l'aéronef. Un tel moyen d'emport externe comprend un lance-missiles qui est fixé sous l'aéronef et qui retient le(s) missile(s). Un moyen d'emport de ce type présente un inconvénient important en ce qui concerne la furtivité. En effet, il provoque la présence de nombreux et forts couplages électromagnétiques entre l'aéronef, le lance-missiles et les ailes, gouvernes et fuselage du missile, ce qui rend très difficile la réduction de la signature radar de cet ensemble formant ledit système d'arme.

Pour essayer de remédier à cet inconvénient, le document US-5 717 397 prévoit d'envelopper chaque missile qui est fixé sous l'aéronef au moyen d'une enveloppe furtive. A cet effet, l'enveloppe furtive est fixée sur le missile correspondant et devient partie intégrante de ce dernier. Une telle enveloppe est formée de manière à réfléchir les ondes électromagnétiques reçues, dans des directions de faible probabilité de présence de radars ennemis, pour réduire le risque d'une éventuelle détection radar. Toutefois, l'enveloppe devenant partie intégrante du missile, on ne modifie pas globalement la géométrie de cet ensemble par rapport à celle du missile tout seul de sorte que l'efficacité de cette solution pour minimiser la signature radar semble réduite.

De plus, surtout, l'enveloppe reste, au moins pour sa partie essentielle, fixée au missile, après le tir, ce qui augmente le poids du missile et agit négativement sur sa manoeuvrabilité et sa vitesse.

Pour remédier à ces inconvénients, le document FR-2 796 454 de la demanderesse, qui décrit le préambule des revendications 1, 14 et 15, prévoit une arme qui comporte, en plus d'un missile :
- un tube furtif fixé sur la structure externe de l'aéronef et présentant une forme qui permet de minimiser la réflexion d'ondes électromagnétiques au moins suivant des directions prioritaires d'observation prédéterminées, ledit missile étant entièrement logé à l'intérieur du tube furtif, en étant désolidarisé dudit tube furtif, c'est-à-dire en n'étant pas fixé sur ce dernier ;
- des moyens d'éjection commandables, notamment un parachute, permettant d'éjecter ledit missile hors dudit tube furtif vers l'arrière ; et
- des moyens de déclenchement commandables, destinés à réaliser le déclenchement de moyens de propulsion dudit missile, mais ceci uniquement après son éjection hors du tube furtif, lorsque l'aéronef se trouve au moins à une distance prédéterminée (distance de sécurité) dudit missile éjecté.

Grâce en particulier audit tube furtif, cette arme permet de réduire efficacement la signature radar du système d'arme (formé de l'arme et de l'aéronef furtif).

De plus, après son éjection, le missile est complètement libéré dudit tube furtif, ce qui permet d'éviter les problèmes précités du document US-5 717 397 concernant notamment la manoeuvrabilité et la vitesse du missile.

Toutefois, lors de l'éjection du missile, il existe un danger, même s'il est très faible, pour l'aéronef, dû à un risque de contact, en particulier des moyens d'éjection (parachute déployé par exemple), puisque cette éjection se fait directement à partir de l'aéronef.

La présente invention a pour objet de remédier à ces inconvénients. Elle concerne une arme, de coût réduit, pourvue d'au moins un missile et destinée à être montée sur un aéronef furtif, cette arme pouvant être montée sur des aéronefs existants et étant telle que le système d'arme formé par ladite arme et l'aéronef qui la porte, présente une signature radar réduite pendant la phase de la mission pendant laquelle l'aéronef furtif porte l'arme, et surtout ladite arme permettant une éjection sûre et maîtrisée du missile hors d'un tube furtif.

A cet effet, selon l'invention, ladite arme du type comportant :
- un tube furtif qui est lié, par l'intermédiaire de moyens de liaison, à la structure externe dudit aéronef et qui présente une forme qui permet de minimiser la réflexion d'ondes électromagnétiques au moins suivant des directions d'observation prédéterminées ;
- au moins un missile qui est entièrement logé à l'intérieur du tube furtif, en étant désolidarisé dudit tube furtif ; et
- des moyens d'éjection commandables, permettant d'éjecter ledit missile hors dudit tube furtif,
est remarquable en ce que lesdits moyens de liaison réalisent une liaison amovible dudit tube furtif sur ladite structure externe de l'aéronef, lesdits moyens de liaison libérant ledit tube furtif lorsqu'ils sont commandés, en ce que lesdits moyens d'éjection comportent des moyens de propulsion commandables dudit missile, et en ce que ladite arme comporte, de plus, des moyens d'ouverture commandables pour créer, lorsqu'ils sont commandés, une ouverture dans une partie antérieure du tube furtif permettant l'éjection dudit missile vers l'avant à l'aide desdits moyens de propulsion, et des premiers, deuxièmes et troisièmes moyens de commande pour commander respectivement lesdits moyens de liaison, lesdits moyens d'ouverture et lesdits moyens de propulsion.

Ainsi, grâce à l'invention, l'éjection du missile hors du tube furtif est uniquement réalisée après la séparation dudit tube et son éloignement de l'aéronef, c'est-à-dire selon l'invention lorsqu'il se trouve à une distance de sécurité prédéterminée de ce dernier, comme on le verra plus en détail ci-dessous. Par conséquent, l'éjection du missile hors du tube est sans risque pour l'aéronef. Comme, de plus, la libération (le lancement) du tube est mise en oeuvre de façon usuelle selon une procédure maîtrisée, comme précisé ci-dessous, toute la phase de tir du missile est sans danger.

En outre, comme le missile est logé dans un tube qui présente des caractéristiques de furtivité, précisées ci-dessous, on est en mesure de réduire la signature radar dudit système d'arme. Dans ce même but, l'arme conforme à l'invention comporte de plus, avantageusement, un carénage furtif qui entoure lesdits moyens de liaison.

En outre, ladite arme peut être facilement montée sur tout type d'aéronef existant. En particulier, il n'est pas nécessaire de concevoir un aéronef spécifique pour mettre en oeuvre la présente invention. De plus, la présente invention est applicable à tout type de missile tiré à partir d'un aéronef, que ce soit un missile air-air, air-mer ou air-sol.

Par ailleurs, par rapport à l'arme conforme à la présente invention, l'arme décrite dans le brevet FR-2 796 454 précité présente également les inconvénients suivants :
- l'ouverture du parachute et l'éjection du missile se font dans le sillage de l'avion (zone d'instabilité), ce qui présente, en plus du risque d'impact du parachute (ou du missile) sur l'avion, des dispersions sur les conditions de séparation du missile de l'avion ;
- le tube reste fixé sous le porteur après le tir du missile, ce qui est pénalisant pour le rayon d'action du porteur et sa survie (masse, traînée et aussi signature "SER" en plus) ; et
- cette arme connue nécessite la présence d'un dispositif séparé pour le largage de l'ensemble formé du tube et du missile, en mode de détresse, pour alléger rapidement l'avion.

De préférence, ledit tube furtif présente une forme cylindrique et comporte une coiffe en forme d'ogive à l'avant, dans le sens de vol de l'aéronef, ce qui permet de minimiser, voire d'annuler, les réflexions d'ondes électromagnétiques dans les directions d'observations généralement considérées comme principales ou prioritaires, à savoir celles correspondant à la visée des parties avant et latérales du tube. De plus, selon l'invention, ledit tube furtif présente de préférence une section transversale circulaire, losangique ou lenticulaire.

Avantageusement, lesdits moyens d'ouverture comportent des moyens pour découper ladite coiffe, moyens qui sont de préférence intégrés dans la paroi dudit tube furtif.

En outre, pour pouvoir contrôler la trajectoire du tube furtif après sa séparation de l'aéronef, de façon avantageuse, ledit tube furtif comporte des premières surfaces portantes susceptibles de prendre l'une de deux positions : une position repliée et une position déployée, et lesdites premières surfaces portantes se trouvent dans la position repliée tant que le tube furtif est lié à la structure externe de l'aéronef et elles sont amenées automatiquement dans la position déployée lorsque le tube furtif est libéré de ladite structure externe.

Par ailleurs, pour augmenter la furtivité dudit tube furtif et/ou dudit carénage furtif et donc du système d'arme formé par l'arme et l'aéronef, avantageusement, ledit tube furtif et/ou ledit carénage furtif sont munis au moins sur une partie de leurs faces externes d'un revêtement absorbant des ondes électromagnétiques.

En outre, de façon avantageuse :
- ledit tube furtif comporte des coussins, sur lesquels repose ledit missile ; et/ou
- ledit tube furtif et/ou ledit carénage furtif sont réalisés en matériau composite de type connu, présentant une haute tenue mécanique et une masse réduite, comme par exemple un matériau composite époxy ou à base de carbone ou de fibres aramides (du type "kevlar").

De plus, selon l'invention :
- lorsque le missile est du type comportant des entrées d'air latérales, de préférence, le tube furtif présente une section transversale présentant une direction de plus grande largeur, et ledit missile est logé dans ledit tube furtif de sorte que lesdites entrées d'air latérales sont agencées selon ladite direction de plus grande largeur ; et
- lorsque le missile est du type comportant une entrée d'air principale (ventrale ou dorsale), avantageusement le tube furtif présente une section transversale présentant au moins une direction allongée, et ledit missile est logé dans ledit tube furtif de sorte que ladite entrée d'air principale (ventrale ou dorsale) est agencée selon ladite direction allongée.

En outre, de façon avantageuse, ledit missile comporte des secondes surfaces portantes (ailes, gouvernes) susceptibles de prendre l'une de deux positions : une position repliée et une position déployée, et lesdites secondes surfaces portantes se trouvent dans la position repliée tant que le missile est logé dans le tube furtif et elles sont amenées automatiquement dans la position déployée lorsque le missile est éjecté hors dudit tube furtif, ce qui permet notamment de réduire les dimensions du tube furtif.

La présente invention concerne également un système d'arme qui comporte un aéronef furtif et une arme telle que celle précitée, qui est montée sur ledit aéronef furtif.

La présente invention concerne, de plus, un procédé pour tirer un missile faisant partie d'une arme montée sur un aéronef furtif et comportant, en plus dudit missile, un tube furtif qui est lié, par l'intermédiaire de moyens de liaison, à la structure externe dudit aéronef et qui présente une forme permettant de minimiser la réflexion d'ondes électromagnétiques au moins suivant des directions d'observation prédéterminées, ledit missile étant entièrement logé à l'intérieur dudit tube furtif.

Selon l'invention, ledit procédé est remarquable en ce que :
a) on commande lesdits moyens de liaison qui réalisent une liaison amovible dudit tube furtif sur ladite structure externe de l'aéronef pour qu'ils libèrent ledit tube furtif de sorte que ledit tube furtif ainsi libéré chute et que sa distance par rapport à l'aéronef croît ;
b) lorsque l'aéronef se trouve à une distance de sécurité du tube furtif qui chute, on commande des moyens d'ouverture pour créer une ouverture dans une partie antérieure dudit tube furtif permettant l'éjection dudit missile ;
c) on commande des moyens de propulsion du missile pour qu'ils éjectent par propulsion ledit missile hors dudit tube furtif, par l'avant, à travers ladite ouverture ; et
d) on guide le missile de façon usuelle.

De plus, avantageusement, à l'étape a), on amène dans une position déployée des premières surfaces portantes qui se trouvent dans une position repliée sur ledit tube furtif.

Les figures du dessin annexé feront bien comprendre comment l'invention peut être réalisée. Sur ces figures, des références identiques désignent des éléments semblables.

Les figures 1 à 3 montrent respectivement trois phases successives du lancement d'un missile faisant partie d'un système d'arme conforme à l'invention.

Les figures 4 et 5 illustrent, schématiquement et partiellement, une arme conforme à l'invention et montée sur un aéronef, respectivement en vue en coupe et en vue latérale.

Les figures 6 à 8 montrent, en coupe transversale, un missile agencé dans un moyen d'emport de missile, respectivement selon trois modes de réalisation différents de l'invention.

Les figures 9 et 10 montrent schématiquement des surfaces portantes du tube furtif, respectivement selon deux modes de réalisation différents.

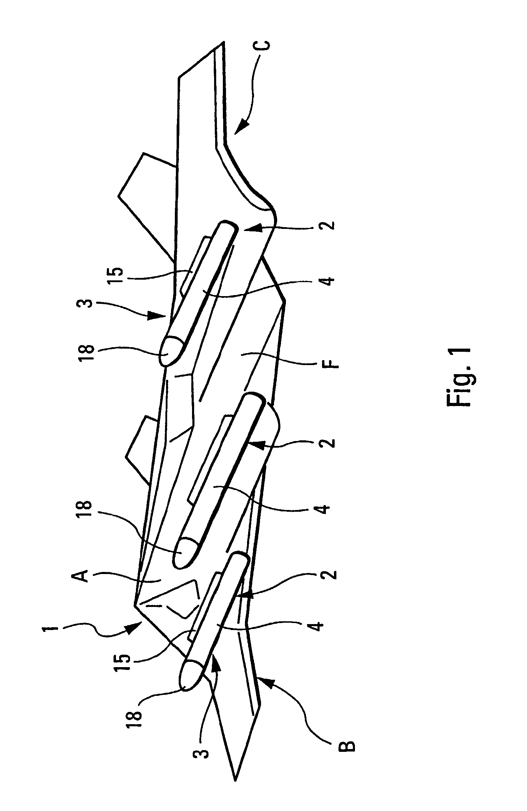

Le système d'arme 1 conforme à l'invention et représenté notamment sur la figure 1 comporte un aéronef A de type furtif, par exemple un avion de combat furtif, et au moins une arme 2 comprenant un missile M. Les figures 1 à 3 représentent le système d'arme 1 dans des phases successives lors d'un tir du missile M.

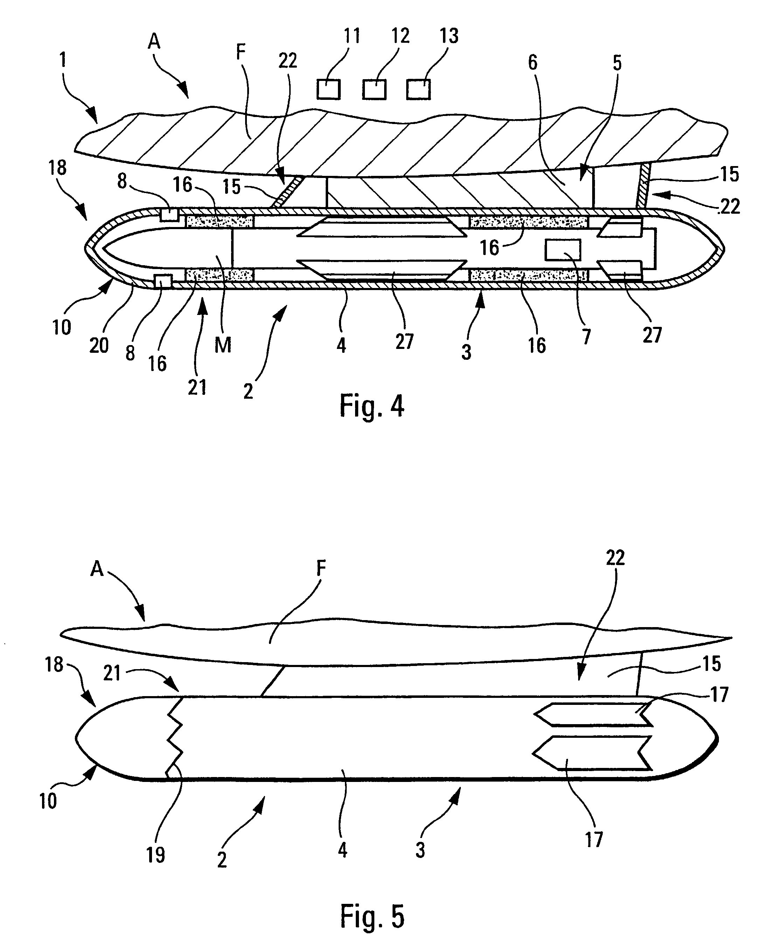

Ladite arme 2 est du type comportant, comme représenté en particulier sur la figure 4, en plus dudit missile M :
- un moyen d'emport 3 comprenant un tube furtif 4 précisé ci-dessous, qui est agencé sous l'aéronef A et qui est lié, par des moyens de liaison 5 comprenant un pylône usuel 6, à la structure (fuselage F) dudit aéronef A. Le missile M, un missile air-air, air-sol ou air-mer, est complètement logé dans ledit tube 4 de manière à ne pas être visible de l'extérieur et ainsi à ne pas modifier la signature radar du système d'arme 1. Toutefois, ledit missile M n'est pas fixé dans ledit tube furtif 4 ; et
- des moyens d'éjection 7 commandables, précisés ci-dessous et permettant d'éjecter ledit missile M hors dudit tube furtif 4.

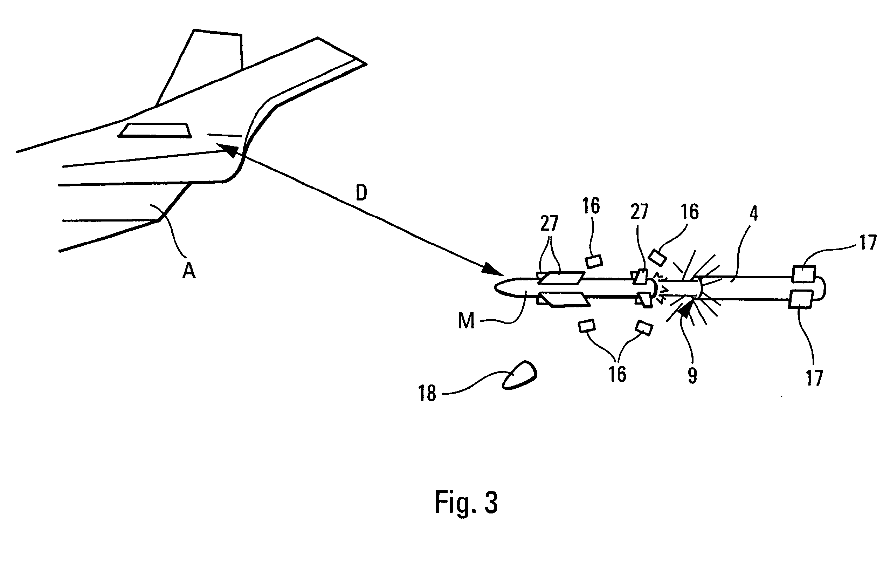

De plus, selon l'invention :
- lesdits moyens de liaison 5 réalisent une liaison amovible dudit tube furtif 4 sur ladite structure externe F de l'aéronef A, lesdits moyens de liaison 5 libérant ledit tube furtif 4 lorsqu'ils sont commandés ;
- lesdits moyens d'éjection 7 comportent des moyens de propulsion commandables dudit missile M ; et
- ladite arme 2 comporte de plus des moyens d'ouverture 8 commandables pour créer, lorsqu'ils sont commandés, une ouverture 9 (figure 3) dans une partie antérieure 10 du tube furtif 4 permettant l'éjection dudit missile M vers l'avant à l'aide desdits moyens d'éjection (de propulsion) 7 comme représenté sur la figure 3, et des moyens de commande 11, 12, 13 pour commander respectivement lesdits moyens de liaison 5, lesdits moyens d'ouverture 8 et lesdits moyens d'éjection 7.

De plus, dans un mode de réalisation préféré, ladite arme 1 comporte de plus un carénage furtif 15 qui entoure lesdits moyens de liaison 5.

Ainsi, comme grâce à l'invention, le missile M est logé dans le tube 4 et les moyens de liaison 5 sont entourés par le carénage 15, ledit tube 4 et ledit carénage 15 présentant des caractéristiques de furtivité précisées ci-dessous, on est en mesure de réduire la signature radar dudit système d'arme 1.

On notera que, dans le cadre de la présente invention, l'installation du tube 4 sous l'aéronef A est identique à celle d'un réservoir supplémentaire de carburant. Les liaisons mécaniques sont de même type et les connexions électriques sont assurées par un nombre restreint de connecteurs. Les liaisons mécaniques et les connexions électriques sont mises en oeuvre par les moyens de liaison 5 comprenant le pylône 6. L'interface entre le tube 4 et l'aéronef A est donc simplifiée. Elle est de plus, de préférence, standardisée, notamment pour faciliter la fabrication.

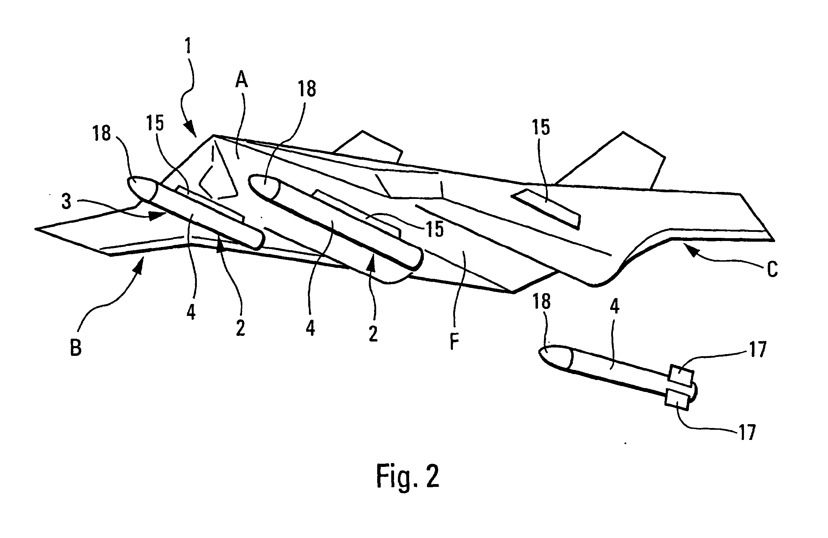

Les tubes 4 sont fixés longitudinalement audit aéronef A, sous les ailes B, C et/ou le fuselage F de ce dernier. Le nombre d'armes 2 et donc de tubes 4 est adapté aux dimensions de l'aéronef A et à la mission à réaliser. Dans l'exemple de réalisation représenté sur les figures 1 et 2, deux tubes 4 sont agencés sous les ailes B et C de l'aéronef A et un troisième tube 4 est agencé au centre sous le fuselage F.

On notera toutefois que, dans le cadre de la présente invention, un tube furtif peut comporter, dans un mode de réalisation particulier non représenté, plus d'un missile, par exemple deux, trois ... missiles.

Comme on peut le voir sur la figure 4, le missile M repose dans le tube 4 sur des coussins 16 représentés schématiquement et identiques, de préférence, à ceux connus et utilisés dans des tubes de lancement destinés aux systèmes d'armes Terre et Mer.

Toutes les opérations d'intégration et de contrôle de l'arme 2 sont effectuées en usine, en utilisant des moyens appropriés à ce type de matériel, ce qui permet d'augmenter la fiabilité et la sécurité de l'arme 2. Ainsi, le tube 4 protège le missile M pendant toutes les phases de sa vie opérationnelle, c'est-à-dire aussi bien à terre qu'en emport sur l'aéronef A.

On précise à présent les différentes étapes conformes à l'invention du tir ou lancement d'un missile M, en référence aux figures 1 à 3. Lorsque, à partir de la position de vol de la figure 1, l'ordre de tir d'un missile M est donné :
a) les moyens de commande 11, qui sont, par exemple, agencés dans un boîtier d'interface prévu dans l'aéronef A ou le pylône 6, commandent les moyens de liaison 5 pour qu'ils libèrent le tube furtif 4 qui chute alors de sorte que sa distance par rapport à l'aéronef A croît, comme représenté sur la figure 2. De plus, le cas échéant, des surfaces portantes 17 précisées ci-dessous qui sont prévues à l'arrière et/ou sur les côtés du tube furtif 4 sont déployées. Ces surfaces portantes 17 permettent le contrôle de la trajectoire du tube furtif 4 après sa séparation de l'aéronef A ;
b) lorsque l'aéronef A se trouve à une distance de sécurité D prédéterminée du tube furtif 4, comme représenté sur la figure 3, les moyens de commande 12 commandent les moyens d'ouverture 8 pour qu'ils créent l'ouverture 9 dans la partie antérieure 10 du tube 4 ;
c) les moyens de commande 13 commandent les moyens d'éjection (ou de propulsion) 7 pour qu'ils éjectent (par propulsion) le missile M hors du tube furtif 4 par l'avant, à travers l'ouverture 9. Les coussins 16 qui supportaient le missile M dans le tube furtif 4 sont également éjectés, comme montré sur la figure 3 ; et
d) après son éjection, on guide le missile M de façon usuelle, à l'aide de moyens de pilotage et de moyens de propulsion connus et non représentés, pour qu'il réalise sa mission, par exemple l'interception d'un mobile (avion ou véhicule terrestre ou maritime) ou la destruction d'un bâtiment. Dans un mode de réalisation préféré, on utilise les moyens de propulsion 7 qui ont mis en oeuvre l'éjection du missile M hors du tube 4, pour propulser ledit missile M dans cette phase de guidage vers une cible.

Ainsi, grâce à l'invention, l'éjection du missile M hors du tube 4 est uniquement réalisée après la séparation dudit tube 4 et son éloignement de l'aéronef A, c'est-à-dire selon l'invention lorsqu'il se trouve à la distance de sécurité D prédéterminée de ce dernier. Par conséquent, l'éjection du missile M hors du tube 4 est sans risque pour l'aéronef A. Comme, de plus, la libération (le lancement) du tube 4 est mise en oeuvre de façon usuelle selon une procédure maîtrisée, toute la phase de tir du missile M est sans danger.

Selon l'invention, le tube furtif 4 présente une forme qui permet de minimiser, voire d'annuler, la réflexion d'ondes électromagnétiques au moins suivant des directions d'observation prédéterminées.

Dans le mode de réalisation préféré représenté sur les figures, ledit tube furtif 4 présente une forme cylindrique et comporte une coiffe 18 en forme d'ogive à l'avant, dans le sens de vol de l'aéronef A, ce qui permet de minimiser la réflexion dans les directions d'observation visant les parties avant et latérales du tube 4.

Dans un mode de réalisation particulier, lesdits moyens d'ouverture 8 comportent des moyens pour découper ladite coiffe 18, selon une ligne 19 (figure 5) par exemple.

De préférence, lesdits moyens 8 pour découper ladite coiffe sont intégrés dans la paroi 20 dudit tube furtif 4.

Ledit tube 4 présente, à l'arrière, une forme aplatie qui réalise un compromis entre les exigences de furtivité et d'aérodynamique, et qui est compatible avec les contraintes d'implantation sous l'aéronef A.

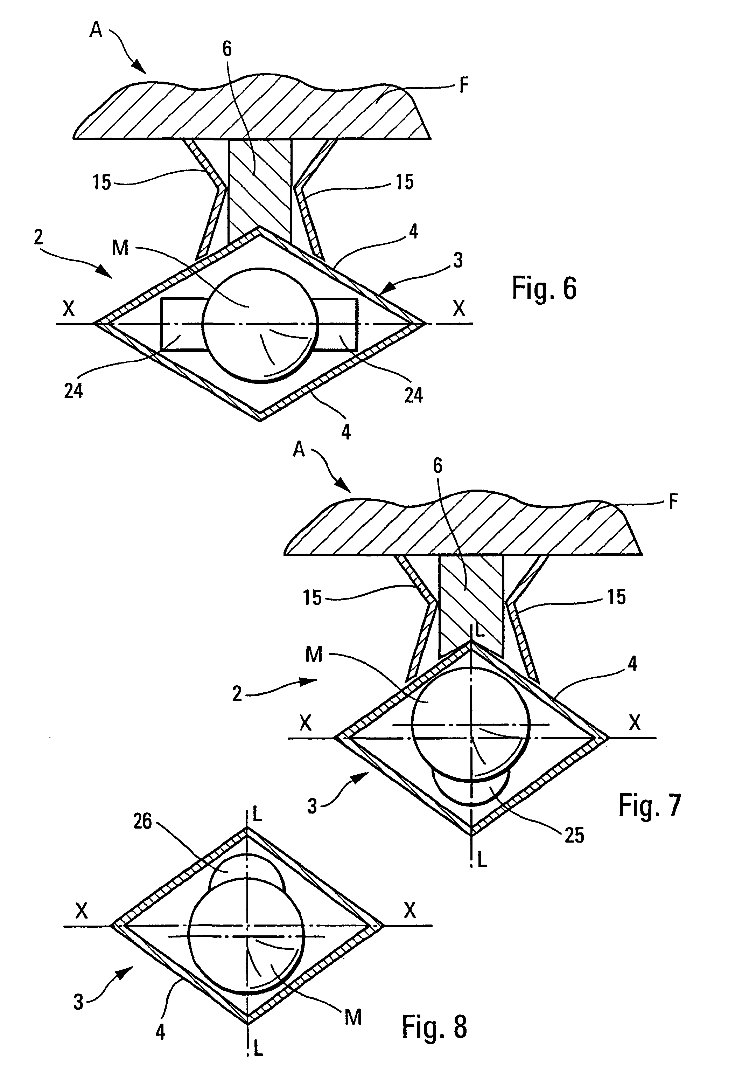

De plus, selon l'invention, ledit tube 4 :
- présente de préférence une section transversale circulaire (figures 1 à 5), losangique (figures 6 à 8) ou lenticulaire ;
- est réalisé en un matériau composite présentant simultanément une tenue mécanique élevée et une masse réduite ; et
- est muni au moins sur une partie de sa face externe 21 (notamment sur les faces avant et latérales) d'un revêtement non représenté et absorbant des ondes électromagnétiques, ce qui permet de réduire davantage la signature radar.

De plus, dans un mode de réalisation préféré, ledit carénage furtif 15 est réalisé en matériau composite et/ou il est muni au moins sur une partie de sa face externe 22 d'un revêtement absorbant des ondes électromagnétiques.

Bien que cela ne soit pas représenté sur la figure 4 pour des raisons de simplification du dessin, les moyens de commande 12 et 13 sont montés à l'intérieur du tube 4. Dans un mode de réalisation préféré, il s'agit d'un unique dispositif réalisant deux commandes qui sont séparées d'un très court instant (par exemple, deux dispositifs pyrotechniques, dont l'un est équipé d'un retard, et qui sont initiés électriquement au même instant). Dans le cas d'un largage normal, les moyens de commande 12 et 13 sont initiés par le moyen de commande 11 en même temps que les moyens de liaison 5 et agissent, avec un certain retard, sur les moyens d'ouverture 8 et les moyens d'éjection 7. Ce retard permet l'ouverture du tube 4 et l'éjection du missile M à une distance de sécurité de l'aéronef A. Dans le cas d'un largage du tube 4 dans un mode de détresse, les moyens de commande 12 et 13 ne sont pas initiés et le missile M n'est pas éjecté hors du tube 4. Par ailleurs, lesdits moyens de commande 12 et 13 peuvent également comporter une fonction de sécurité qui est chargée de contrôler la bonne séparation du tube 4 de l'aéronef A et de vérifier que la mise à feu du missile M sera bien réalisée à la distance de sécurité prévue.

Par ailleurs, dans le cas où le missile M comporte des entrées d'air 24 latérales, le tube 4 présente une section transversale, par exemple losangique comme représenté sur la figure 6 ou lenticulaire, présentant une direction X-X de plus grande largeur, et ledit missile M est logé dans ledit tube 4 de sorte que lesdites entrées d'air 24 sont agencées selon ladite direction X-X de plus grande largeur, ce qui permet d'adapter les dimensions du tube 4 à celles du missile M et donc de les réduire au maximum.

Dans le cas où le missile M comporte une entrée d'air ventrale 25 ou une entrée d'air dorsale 26, les dispositions du missile M sont représentées respectivement sur les figure 7 et 8. Le tube 4 présente dans ce cas une section losangique moins aplatie que sur la figure 6, avec une direction L-L (orthogonale à la direction X-X) plus allongée. L'entrée d'air ventrale 25 ou l'entrée d'air dorsale 26 est agencée selon ladite direction L-L.

Par ailleurs, pour réduire les dimensions du tube 4, le missile M comporte des surfaces portantes 27 (ailes, gouvernes) susceptibles de prendre l'une de deux positions : une position repliée (figure 4) et une position déployée (figure 3). Lesdites surfaces portantes 27 se trouvent dans la position repliée tant que le missile M est logé dans le tube furtif 4 et elles sont amenées automatiquement par des moyens connus et non représentés dans la position déployée, lorsque le missile M est éjecté hors dudit tube 4 (figure 3).

Par ailleurs, les surfaces portantes 17 prévues sur le tube furtif 4 sont susceptibles de prendre l'une de deux positions : une position repliée (figure 5) et une position déployée (figures 2, 9 et 10). Lesdites surfaces portantes 17 se trouvent dans la position repliée tant que le tube furtif 4 est lié à la structure externe de l'aéronef A et elles sont amenées automatiquement dans la position déployée lorsque le tube furtif 4 est libéré de ladite structure externe (figure 2).

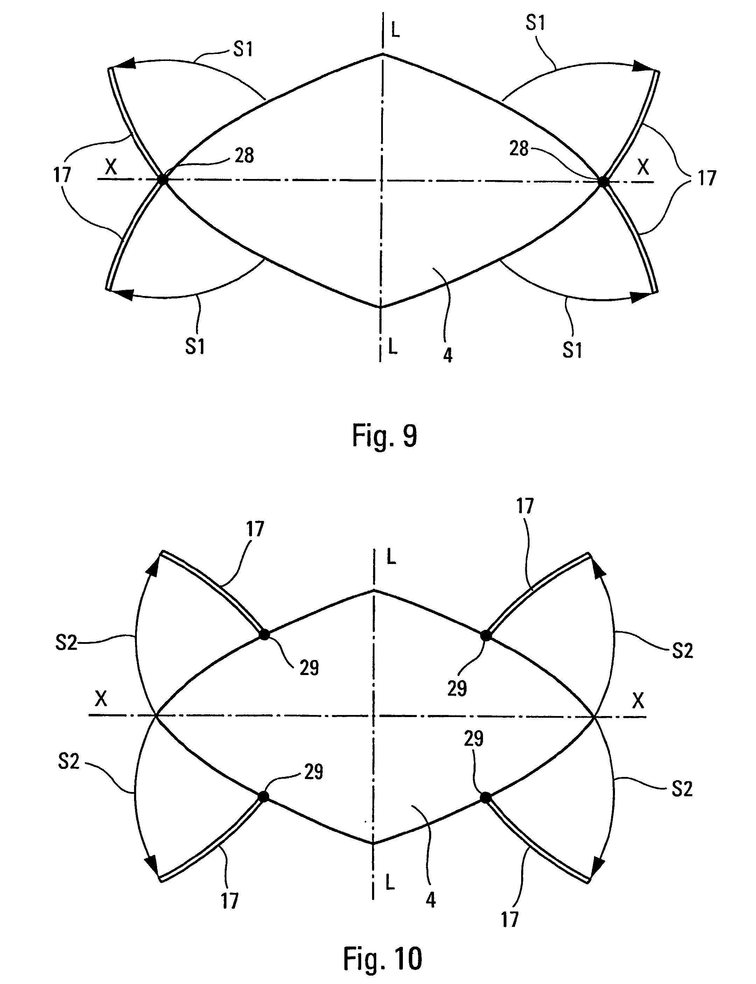

Lesdites surfaces portantes 17 sont déployées en pivotant d'un même angle S1 ou S2 autour de pivots 28 ou 29, comme représenté à titre d'illustration respectivement sur les figures 9 et 10 dans deux variantes différentes.

## Revendications

1. Arme (2) montée sur un aéronef furtif (A) et comportant :
- un tube furtif (4) qui est lié, par l'intermédiaire de moyens de liaison (5), à la structure externe dudit aéronef (A) et qui présente une forme qui permet de minimiser la réflexion d'ondes électromagnétiques au moins suivant des directions d'observation prédéterminées ;
- au moins un missile (M) qui est entièrement logé à l'intérieur du tube furtif (4), en étant désolidarisé dudit tube furtif (4) ; et
- des moyens d'éjection (7) commandables, permettant d'éjecter ledit missile (M) hors dudit tube furtif (4),
**caractérisée en ce que** lesdits moyens de liaison (5) réalisent une liaison amovible dudit tube furtif (4) sur ladite structure externe de l'aéronef (A), lesdits moyens de liaison (5) libérant ledit tube furtif (4) lorsqu'ils sont commandés, **en ce que** lesdits moyens d'éjection (7) comportent des moyens de propulsion commandables dudit missile (M), et **en ce que** ladite arme (2) comporte, de plus, des moyens d'ouverture (8) commandables pour créer, lorsqu'ils sont commandés, une ouverture (9) dans une partie antérieure (10) du tube furtif (4) permettant l'éjection dudit missile (M) vers l'avant à l'aide desdits moyens d'éjection (7), et des premiers, deuxièmes et troisièmes moyens de commande (11, 12, 13) pour commander respectivement lesdits moyens de liaison (5), lesdits moyens d'ouverture (8) et lesdits moyens d'éjection (7).

2. Arme selon la revendication 1,
**caractérisée en ce qu'**elle comporte, de plus, un carénage furtif (15) qui entoure lesdits moyens de liaison (5).

3. Arme selon l'une des revendications 1 et 2,
**caractérisée en ce que** ledit tube furtif (4) présente une forme cylindrique et comporte une coiffe (18) à l'avant, dans le sens de vol de l'aéronef, ladite coiffe (18) correspondant à ladite partie antérieure (10) du tube furtif (4), et **en ce que** lesdits moyens d'ouverture (8) comportent des moyens pour découper ladite coiffe (18).

4. Arme selon la revendication 3,
**caractérisée en ce que** lesdits moyens (8) pour découper ladite coiffe (18) sont intégrés dans la paroi (20) dudit tube furtif (4).

5. Arme selon l'une des revendications 1 à 4,
**caractérisée en ce que** ledit tube furtif (4) comporte des premières surfaces portantes (17) susceptibles de prendre l'une de deux positions : une position repliée et une position déployée, et **en ce que** lesdites premières surfaces portantes (17) se trouvent dans la position repliée tant que le tube furtif (4) est lié à la structure externe de l'aéronef (A) et elles sont amenées automatiquement dans la position déployée, lorsque le tube furtif (4) est libéré de ladite structure externe.

6. Arme selon l'une des revendications 1 à 5,
**caractérisée en ce que** ledit tube furtif (4) est muni au moins sur une partie de sa face externe (21) d'un revêtement absorbant des ondes électromagnétiques.

7. Arme selon la revendication 2,
**caractérisée en ce que** ledit carénage furtif (15) est muni au moins sur une partie de sa face externe (22) d'un revêtement absorbant des ondes électromagnétiques.

8. Arme selon l'une quelconque des revendications précédentes,
**caractérisée en ce que** ledit tube furtif (4) est réalisé en matériau composite.

9. Arme selon la revendication 2,
**caractérisée en ce que** ledit carénage furtif (15) est réalisé en matériau composite.

10. Arme selon l'une des revendications 1 à 9,
**caractérisée en ce que** ledit tube furtif (4) comporte des coussins (16) pour supporter ledit missile (M).

11. Arme selon l'une des revendications 1 à 10,
**caractérisée en ce que** ledit missile (M) est pourvu d'entrées d'air latérales (24), **en ce que** ledit tube furtif (4) présente une section transversale présentant une direction (X-X) de plus grande largeur, et **en ce que** ledit missile (M) est logé dans ledit tube furtif (4) de sorte que lesdites entrées d'air latérales (24) sont agencées selon ladite direction (X-X) de plus grande largeur.

12. Arme selon l'une des revendications 1 à 10,
**caractérisée en ce que** ledit missile (M) est pourvu d'une entrée d'air principale (25, 26), **en ce que** ledit tube furtif (4) présente une section transversale présentant au moins une direction allongée (L-L), et **en ce que** ledit missile (M) est logé dans ledit tube furtif (4) de sorte que ladite entrée d'air principale (25, 26) est agencée selon ladite direction allongée (L-L).

13. Arme selon l'une des revendications 1 à 12,
**caractérisée en ce que** ledit missile (M) comporte des secondes surfaces portantes (27) susceptibles de prendre l'une de deux positions : une position repliée et une position déployée, et **en ce que** lesdites secondes surfaces portantes (27) se trouvent dans la position repliée tant que le missile (M) est logé dans le tube furtif (4) et elles sont amenées automatiquement dans la position déployée lorsque le missile (M) est éjecté hors dudit tube furtif (4).

14. Système d'arme,
**caractérisé en ce qu'**il comporte un aéronef furtif (A) et au moins une arme (2) telle que celle spécifiée sous l'une quelconque des revendications 1 à 13, qui est montée sur ledit aéronef furtif (A).

15. Procédé pour tirer un missile (M) faisant partie d'une arme (2) montée sur un aéronef furtif (A) et comportant, en plus dudit missile (M), un tube furtif (4) qui est lié, par l'intermédiaire de moyens de liaison (5), à la structure externe dudit aéronef (A) et qui présente une forme permettant de minimiser la réflexion d'ondes électromagnétiques au moins suivant des directions d'observation prédéterminées, ledit missile (M) étant entièrement logé à l'intérieur dudit tube furtif (4),
**caractérisé en ce que** :
a) on commande lesdits moyens de liaison (5) qui réalisent une liaison amovible dudit tube furtif (4) sur ladite structure externe de l'aéronef (A) pour qu'ils libèrent ledit tube furtif (4) de sorte que ledit tube furtif (4) ainsi libéré chute et que sa distance par rapport à l'aéronef (A) croît ;
b) lorsque l'aéronef (A) se trouve à une distance de sécurité (D) prédéterminée du tube furtif (4) qui chute, on commande des moyens d'ouverture (8) pour créer une ouverture (9) dans une partie antérieure (10) dudit tube furtif (4) permettant l'éjection dudit missile (M) ;
c) on commande des moyens d'éjection (7) du missile (M) pour qu'ils éjectent par propulsion ledit missile (M) hors dudit tube furtif (4) par l'avant à travers ladite ouverture (9) ; et
d) on guide le missile (M).

16. Procédé selon la revendication 15,
**caractérisé en ce que**, de plus, à l'étape a), on amène dans une position déployée des surfaces portantes (17) qui se trouvent dans une position repliée sur ledit tube furtif (4).

## Patentansprüche

1. Waffe (2), an einem Tarnkappen-Flugzeug (A) montiert und aufweisend:
- ein Tarnrohr (4), das mit Hilfe von Verbindungsmitteln (5) mit der Außenstruktur des Flugzeugs (A) verbunden ist und eine Form aufweist, die es erlaubt, die Reflexion elektromagnetischer Wellen wenigstens in vorherbestimmte Beobachtungsrichtungen zu minimieren;
- wenigstens eine Rakete (M), die sich vollständig im Inneren des Tarnrohrs (4) befindet und dabei von dem Tarnrohr (4) gelöst ist; und
- steuerbare Auswurfmittel (7), die es erlauben, die Rakete (M) aus dem Tarnrohr (4) auszuwerfen,
**dadurch gekennzeichnet, dass** die Verbindungsmittel (5) eine lösbare Verbindung des Tarnrohrs (4) mit der Außenstruktur des Flugzeugs (A) herstellen, wobei die Verbindungsmittel (5) das Tarnrohr (4) lösen, wenn sie angesteuert werden, dass die Auswurfmittel (7) steuerbare Antriebsmittel für die Rakete (M) aufweisen, und dass die Waffe (2) ferner steuerbare Öffnungsmittel (8) aufweist, die angesteuert werden, um in einem vorderen Abschnitt (10) des Tarnrohrs (4) eine Öffnung (9) zu schaffen, die mit Hilfe der Auswurfmittel (7) das Auswerfen der Rakete (M) nach vorne erlaubt, sowie erste, zweite und dritte Steuermittel (11, 12, 13) zum Ansteuern der Verbindungsmittel (5), der Öffnungsmittel (8) beziehungsweise der Auswurfmittel (7).

2. Waffe nach Anspruch 1,
**dadurch gekennzeichnet, dass** sie ferner eine Tarnverkleidung (15) aufweist, welche die Verbindungsmittel (5) umgibt.

3. Waffe nach einem der Ansprüche 1 und 2,
**dadurch gekennzeichnet, dass** das Tarnrohr (4) zylinderförmig ist und vorne, in Flugrichtung des Flugzeugs, eine Haube (18) aufweist, die zu dem vorderen Abschnitt (10) des Tarnrohres (4) passt, und dass die Öffnungsmittel (8) Mittel zum Zerschneiden der Haube (18) aufweisen.

4. Waffe nach Anspruch 3,
**dadurch gekennzeichnet, dass** die Mittel (8) zum Zerschneiden der Haube (18) in die Wand (20) des Tarnrohrs (4) integriert sind.

5. Waffe nach einem der Ansprüche 1 bis 4,
**dadurch gekennzeichnet, dass** das Tarnrohr (4) erste aerodynamische Flächen (17) aufweist, die eine von zwei Positionen einnehmen können; eine eingefahrene Position und eine ausgefahrene Position, und dass sich die ersten aerodynamischen Flächen (17) so lange in der eingefahrenen Position befinden, wie das Tarnrohr (4) mit der Außenstruktur des Flugzeugs (A) verbunden ist, und sie automatisch in die ausgefahrene Position gebracht werden, wenn das Tarnrohr (4) von der Außenstruktur gelöst wird.

6. Waffe nach einem der Ansprüche 1 bis 5,
**dadurch gekennzeichnet, dass** das Tarnrohr (4) wenigstens auf einem Abschnitt seiner Außenfläche (21) mit einer Beschichtung versehen ist, die elektromagnetische Wellen absorbiert.

7. Waffe nach Anspruch 2,
**dadurch gekennzeichnet, dass** die Tarnverkleidung (15) wenigstens auf einem Abschnitt ihrer Außenfläche (22) mit einer Beschichtung versehen ist, die elektromagnetische Wellen absorbiert.

8. Waffe nach einem der vorhergehenden Ansprüche,
**dadurch gekennzeichnet, dass** das Tarnrohr (4) aus einem Verbundmaterial hergestellt ist.

9. Waffe nach Anspruch 2,
**dadurch gekennzeichnet, dass** die Tarnverkleidung (15) aus einem Verbundmaterial hergestellt ist.

10. Waffe nach einem der Ansprüche 1 bis 9,
**dadurch gekennzeichnet, dass** das Tarnrohr (4) Kissen (16) aufweist, um die Rakete (M) zu lagern.

11. Waffe nach einem der Ansprüche 1 bis 10,
**dadurch gekennzeichnet, dass** die Rakete (M) mit seitlichen Lufteinlässen (24) versehen ist, und dass das Tarnrohr (4) einen Querschnitt hat, der in einer Richtung (X-X) breiter ist, und dass die Rakete (M) so in dem Tarnrohr (4) liegt, dass die seitlichen Lufteinlässe (24) in der breiteren Richtung (X-X) angeordnet sind.

12. Waffe nach einem der Ansprüche 1 bis 10,
**dadurch gekennzeichnet, dass** die Rakete (M) mit einem Haupt-Lufteinlass (25, 26) versehen ist, und dass das Tarnrohr (4) einen Querschnitt mit wenigstens einer längeren Richtung (L-L) hat, und dass die Rakete (M) so in dem Tarnrohr (4) liegt, dass der Haupt-Lufteinlass (25, 26) in der längeren Richtung (L-L) angeordnet ist.

13. Waffe nach einem der Ansprüche 1 bis 12,
**dadurch gekennzeichnet, dass** die Rakete (M) zweite aerodynamische Flächen (27) aufweist, die eine von zwei Positionen einnehmen können: eine eingefahrene Position und eine ausgefahrene Position, und dass sich die zweiten aerodynamischen Flächen (27) so lange in der eingefahrenen Position befinden, wie sich die Rakete (M) in dem Tarnrohr (4) befindet, und sie automatisch in die ausgefahrene Position gebracht werden, wenn die Rakete (M) aus dem Tarnrohr (4) ausgeworfen wird.

14. Waffensystem,
**dadurch gekennzeichnet, dass** es ein Tarnkappen-Flugzeug (A) und wenigstens eine Waffe (2) aufweist wie jene, die unter einem der Ansprüche 1 bis 13 näher beschrieben wurde, und die an dem Tarnkappen-Flugzeug (A) montiert ist.

15. Verfahren zum Abschießen einer Rakete (M), die Teil einer Waffe (2) ist, die an einem Tarnkappen-Flugzeug (A) montiert ist und zusätzlich zu der Rakete (M) ein Tarnrohr (4) aufweist, das mit Hilfe von Verbindungsmitteln (5) mit der Außenstruktur des Flugzeugs (A) verbunden ist und eine Form aufweist, die es erlaubt, die Reflexion elektromagnetischer Wellen wenigstens in vorherbestimmte Beobachtungsrichtungen zu minimieren, wobei sich die Rakete (M) vollständig im Inneren des Tarnrohrs (4) befindet,
**dadurch gekennzeichnet, dass**:
a) man die Verbindungsmittel (5) ansteuert, die eine lösbare Verbindung des Tarnrohrs (4) mit der Außenstruktur des Flugzeugs (A) herstellen, damit diese das Tarnrohr (4) lösen, so dass das losgelöste Tarnrohr (4) abfällt und sich der Abstand zu dem Flugzeug (A) vergrößert;
b) man die Öffnungsmittel (8) ansteuert, wenn sich das Flugzeug (A) in einem vorherbestimmten Sicherheitsabstand (D) zu dem fallenden Tarnrohr (4) befindet, um in dem vorderen Abschnitt (10) des Tarnrohrs (4) eine Öffnung (9) zu schaffen, die das Auswerfen der Rakete (M) erlaubt;
c) man Auswurfmittel (7) der Rakete (M) ansteuert, damit diese durch Antriebskraft die Rakete (M) durch die Öffnung (9) hindurch nach vorne aus dem Tarnrohr (4) auswerfen; und
d) man die Rakete (M) lenkt.

16. Verfahren nach Anspruch 15,
**dadurch gekennzeichnet, dass** man ferner in Schritt a) aerodynamische Flächen (17), die sich in einer eingefahrenen Position auf dem Tarnrohr (4) befinden, in eine ausgefahrene Position bringt.

## Claims

1. Weapon (2) mounted on a stealth aircraft (A) and comprising:
- a stealth tube (4) which is tied, by way of linking means (5), to the external structure of the said aircraft (A) and which exhibits a shape which makes it possible to minimize the reflection of electromagnetic waves at least along predetermined directions of observation;
- at least one missile (M) which is entirely lodged inside the stealth tube (4) while being separate from the said stealth tube (4); and
- controllable means of ejection (7) making it possible to eject the said missile (M) from the said stealth tube (4),
**characterized in that** the said linking means (5) effect a removable link of the said stealth tube (4) to the said external structure of the aircraft (A), the said linking means (5) freeing the said stealth tube (4) when they are controlled, **in that** the said means of ejection (7) comprise controllable means of propulsion of the said missile (M) and **in that** the said weapon (2) comprises, moreover, controllable means of opening (8) so as to create, when they are controlled, an opening (9) in an anterior part (10) of the stealth tube (4) allowing the ejection of the said missile (M) frontwards with the aid of the said means of ejection (7), and first, second and third means of control (11, 12, 13) for controlling respectively the said linking means (5), the said means of opening (8) and the said means of ejection (7).

2. Weapon according to Claim 1,
**characterized in that** it comprises, moreover, a stealth fairing (15) which surrounds the said linking means (5).

3. Weapon according to one of Claims 1 and 2,
**characterized in that** the said stealth tube (4) exhibits a cylindrical shape and comprises a cowl (18) at the front, in the sense of flight of the aircraft, the said cowl (18) corresponding to the said anterior part (10) of the stealth tube (4), and **in that** the said means of opening (8) comprise means for cutting the said cowl (18).

4. Weapon according to Claim 3,
**characterized in that** the said means (8) for cutting the said cowl (18) are integrated into the wall (20) of the said stealth tube (4).

5. Weapon according to one of Claims 1 to 4,
**characterized in that** the said stealth tube (4) comprises first lifting surfaces (17) able to take one of two positions: a folded back position and an unfurled position, and **in that** the said first lifting surfaces (17) are in the folded back position as long as the stealth tube (4) is tied to the external structure of the aircraft (A) and they are brought automatically into the unfurled position, when the stealth tube (4) is freed from the said external structure.

6. Weapon according to one of Claims 1 to 5,
**characterized in that** the said stealth tube (4) is furnished at least on a part of its external face (21) with a coating that absorbs electromagnetic waves.

7. Weapon according to Claim 2,
**characterized in that** the said stealth fairing (15) is furnished at least on a part of its external face (22) with a coating that absorbs electromagnetic waves.

8. Weapon according to any one of the preceding claims,
**characterized in that** the said stealth tube (4) is made of a composite material.

9. Weapon according to Claim 2,
**characterized in that** the said stealth fairing (15) is made of a composite material.

10. Weapon according to one of Claims 1 to 9,
**characterized in that** the said stealth tube (4) comprises cushions (16) for supporting the said missile (M).

11. Weapon according to one of Claims 1 to 10,
**characterized in that** the said missile (M) is provided with lateral air inlets (24), and **in that** the said stealth tube (4) exhibits a transverse section exhibiting a direction (X-X) of greater width, and **in that** the said missile (M) is lodged in the said stealth tube (4) so that the said lateral air inlets (24) are arranged along the said direction (X-X) of larger width.

12. Weapon according to one of Claims 1 to 10,
**characterized in that** the said missile (M) is provided with a main air inlet (25, 26), **in that** the said stealth tube (4) exhibits a transverse section exhibiting at least one elongate direction (L-L), and **in that** the said missile (M) is lodged in the said stealth tube (4) so that the said main air inlet (25, 26) is arranged along the said elongate direction (L-L).

13. Weapon according to one of Claims 1 to 12,
**characterized in that** the said missile (M) comprises second lifting surfaces (27) able to take one of two positions: a folded back position and an unfurled position, and **in that** the said second lifting surfaces (27) are in the folded back position as long as the missile (M) is lodged in the stealth tube (4) and they are brought automatically into the unfurled position when the missile (M) is ejected from the said stealth tube (4).

14. Weapon system,
**characterized in that** it comprises a stealth aircraft (A) and at least one weapon (2) such as that specified under any one of Claims 1 to 13, which is mounted on the said stealth aircraft (A).

15. Method for firing a missile (M) forming part of a weapon (2) mounted on a stealth aircraft (A) and comprising, in addition to the said missile (M), a stealth tube (4) which is tied, by way of linking means (5), to the external structure of the said aircraft (A) and which exhibits a shape making it possible to minimize the reflection of electromagnetic waves at least along predetermined directions of observation, the said missile (M) being entirely lodged inside the said stealth tube (4),
**characterized in that**:
a) the said linking means (5) which effect a removable link of the said stealth tube (4) to the said external structure of the aircraft (A) are controlled so that they free the said stealth tube (4) so that the said stealth tube (4) thus freed drops and that its distance with respect to the aircraft (A) increases;
b) when the aircraft (A) is at a predetermined safety distance (D) from the stealth tube (4) which drops, means of opening (A) are controlled so as to create an opening (9) in an anterior part (10) of the said stealth tube (4) allowing the ejection of the said missile (M);
c) means of ejection (7) of the missile (M) are controlled so that they eject by propulsion the said missile (M) from the said stealth tube (4) via the front through the said opening (9); and
d) the missile (M) is guided.

16. Method according to Claim 15,
**characterized in that**, moreover, in step a), lifting surfaces (17) which are in a folded back position on the said stealth tube (4) are brought into an unfurled position.
